# EUROPEAN PATENT SPECIFICATION

(11) **EP 2 367 439 B1**
(45) Date of publication and mention of the grant of the patent: **05.09.2012**
(21) Application number: 09760891.3
(22) Date of filing: 01.12.2009
(51) Int. Cl.: A23D 7/04

(54) **PROCESS FOR THE PREPARATION OF AN EDIBLE FAT CONTINUOUS FOOD PRODUCT**
VERFAHREN ZUR HERSTELLUNG EINES NAHRUNGSMITTELPRODUKTS MIT KONTINUIERLICHER SPEISEFETTPHASE
PROCÉDÉ POUR LA PRÉPARATION D'UN PRODUIT ALIMENTAIRE CONTINU GRAS COMESTIBLE

(30) Priority: 19.12.2008 EP 08172298
(43) Date of publication of application: 28.09.2011
(73) Proprietor: Unilever NV, 3013 AL Rotterdam (NL); Unilever PLC, Blackfriars London Greater London EC4Y 0DY (GB)
(72) Inventor: BEZEMER, Albert Jan, NL-3133 AT Vlaardingen (NL); HUIZINGA, Hink, NL-3133 AT Vlaardingen (NL); MALSSEN, Kees Frederik van, NL-3133 AT Vlaardingen (NL)
(74) Representative: Corsten, Michael Allan
(86) International application number: PCT/EP2009/066104
(87) International publication number: WO 2010/069751

(56) References cited:
- EP-A- 1 795 257
- EP-A- 1 865 786
- US-B1- 6 322 842

## Description

### Field of the invention

The present invention relates to a process suitable for implementation at factory scale for manufacturing an edible fat continuous food product.

### Background of the invention

Fat continuous food products are well known in the art and include for example shortenings comprising a fat phase and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) and helps to stabilize the aqueous phase, if present, by forming a fat crystal network. For a margarine or spread, ideally the structuring fat has such properties that it melts or dissolves at mouth temperature. Otherwise the product may have a heavy and/or waxy mouthfeel.

Important aspects of a fat continuous spread like for example margarine and low fat spread, the low fat spread usually comprising up to 45 wt% fat on total composition, are for example hardness, spreadibility and ability to withstand temperature cycling. Temperature cycling means that the product is subjected to low and high temperatures (e.g. when the consumer takes the product out of the refrigerator and leaves it for some time at the table to use it). This may have a negative influence on the structure of the spread (like for example destabilization of the emulsion or oil-exudation).

Generally edible fat continuous food products like shortenings and margarines and similar edible fat continuous spreads are prepared according to processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

In a typical implementation at factory scale the fat continuous food products are produced from an aqueous phase and a fat phase which are combined to form a pre-emulsion which is subjected to cooling and texturising treatments in order to obtain a plastic product such as a stick margarine or a tub margarine. The fat continuous food product is automatically packed by a packaging machine.

If the packaging machine breaks down or has to be stopped for other reasons the other parts of the production line cannot so easily be stopped as, for example, this will result in over working of the food product being formed in the cooling and texturising steps or will result in clogging of the production line because of the 'over' cooling of the product in the cooling equipment. Even the risk exists that the cooling equipment starts to freeze and causes damage to the equipment.

An interruption of the packaging machine in a typical factory production line may therefore result in waste of the produced product which cannot be packed. Temporarily storage of the product is also not possible as the product will spoil or at least will result in products of lesser quality. Solutions have been provided in the art to allow for an interruption of the packaging machine and prevent the waste of product.

This is called 'rework', and involves the remelting of the formed food and recirculation into the pre-emulsion.

Typical examples are described in figure 27 and figures 32(a) and (b) in Bailey's Industrial Oil and Fat Products, 6th Edition, Volume 5 (Edible Oil and Fat Products: Processing Technologies) page 502 and 518. The formed product is remelted using a plate heat exchanger and re-inserted into the production line right before the first cooling step or alternatively the product is collected in a 'remelting vessel' after which it is re-inserted into the production line.

A disadvangtage of these conventional processes in a factory implementation is that additional equipment has to be installed to facilitate the rework.

A further disadvantage is that the rework requires additional energy as the recirculated product has to be heated and cooled again.

Another disadvantage is that the process of rework negatively influences the quality of the food product because it has been processed more than once.

Document EP 1795257 discloses a method of stabilizing an edible dispersion comprising oil, using micronised fat powder.

It is an object of the present invention to provide an alternative process to prepare an edible fat continuous food product.
It is another object of the present invention to provide a process to prepare an edible fat continuous food product that does not rely on rework in case the packaging machine has to be stopped.
It is yet another object of the present invention to provide a process to prepare an edible fat continuous food product that can be implemented at factory scale.
It is a further object of the present invention to provide a process to prepare an edible fat continuous food product that requires less energy and/or equipment.
It is still a further object of the present invention to provide a process to prepare an edible fat continuous food product that is a continuous process and/or can be temporarily stopped during production.

### Summary of the invention

We have found a process for the preparation of a fat continuous food product that can easily be implemented at a factory scale and does not require rework in case the packaging machine has to be stopped or breaks down.

Accordingly the present invention provides a process suitable for implementation at factory scale for manufacturing an edible fat continuous food product comprising the steps of
a. providing a fat mixture comprising fat powder and liquid oil;
b. providing an aqueous phase;
c. forming the edible fat continuous food product by mixing the aqueous phase and the fat mixture;
d. packing of the food product;
wherein
- the fat powder comprises structuring fat;
- the amount of fat powder in the fat mixture based on total amount of fat mixture is 8 to 25 wt%;
- the fat mixture prior to mixing is kept at a temperature of 0 to 12 degrees Celsius;
- the fat mixture is kept in motion prior to mixing;
- the temperature of the aqueous phase at the time of mixing the aqueous phase and the fat mixture is such that the temperature of the mixture of the aqueous phase and the fat mixture is equal to or below 25 degrees Celsius.

### Detailed description of the invention

Weight percentage (wt%) is based on the total weight of the composition unless otherwise stated.
The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.
Ambient temperature is a temperature of about 20 degrees Celsius.

The process of the present invention comprises the steps of providing a fat mixture comprising fat powder and liquid oil, as well as providing an aqueous phase. The edible fat continuous food product is formed by mixing the aqueous phase and the fat mixture. This is then followed by packing of the food product.

The process can be suitably implemented at factory scale by for example preparing and storing the fat mixture and the aqueous phase in separate holding tanks that feed the fat mixture and the aqueous phase in the desired amounts into a mixing device that forms the edible fat continuous food product by mixing the aqueous phase and the fat mixture. The resulting food product can then be packed using a suitable packaging machine.

The process uses fat powder comprising structuring fat and does not require the need to form the crystal network to make the spread by heating and cooling the whole composition. Such processes have been described previously in for example EP 1865786 A. This process is characterized in that (part of) the structuring fat is pre-crystallized and is not formed from the fat phase (comprising the structuring fat and liquid oil) optionally including the aqueous phase as is the case in conventional ways of preparing a spread. One of the main advantages of this process is that it requires less energy to make.

It is important that the fat powder is not subjected to temperatures at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

### Fat powder

The fat powder comprises structuring fat and preferably comprises at least 80 wt% of structuring fat, more preferably at least 85 wt%, even more preferably at least 90 wt%, still more preferably at least 95 wt% and most preferably at least 98 wt%. Most preferably the edible fat powder essentially consists of structuring fat.

The structuring fat may be a single fat or a mixture of different fats. The structuring fat may be of vegetable, animal or marine origin. Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of structuring fat of vegetable origin.

The structuring fat as present in the edible fat powder preferably has a solid fat content N10 from 50 to 100, N20 from 26 to 95 and N35 from 5 to 60.

The amount of fat powder used is suitably chosen such that the required structuring (i.e. stable emulsion) is obtained. It will be appreciated that the amount of fat powder depends on the amount of structuring fat in the fat powder and the desired amount of structuring fat on total product. Preferably the amount of structuring fat on total amount of product is 1 to 20 wt%, more preferably 2 to 15 wt% and even more preferably 4 to 12 wt%.

Suitable methods to prepare the fat powder include for example Super Critical Melt Micronisation (ScMM), also known as particles from gas saturated solutions (PGSS). This is a commonly known method and is for example described in J. of Supercritical Fluids 43 (2007) 181-190 and EP1651338.

The process according to the invention is especially beneficial for use with fat powders that have been prepared using an ScMM process. Preferably the fat powder in the process according to the invention is a fat powder obtainable by supercritical melt micronisation.

### The fat mixture

The fat mixture is provided by mixing fat powder and liquid oil. A suitable method to prepare a fat mixture is for example by mixing fat powder and liquid oil and applying vacuum de-aeration. The fat mixture may be prepared using standard mixing equipment common in the field of spreads making for such use, like for example obtainable from Esco-Labor. The fat mixture can be suitably held in a holding tank from which the fat mixture is fed into a mixing device. To allow for a continous process two holding tanks may be employed that are alternately used to feed into the mixing device thereby providing for an uninterrupted supply of fat mixture and thus production of the fat continuous food product.

The oil in the fat mixture is liquid oil and may be single oil or a mixture of different oils, and may comprise other components. Preferably at least 50 wt% of the oil (based on total amount of oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

The amount of fat powder in the fat mixture is 8 to 25%. This provides for an optimal fat mixture as it helps to extend the residence time of the fat mixture in the holding tank without affecting the suitability of the fat mixture for use in a process for making a fat continuous food product. Preferably the amount of fat powder in the fat mixture is 10 to 20%, more preferably 12 to 18%.

Care must be taken that the temperature of the fat mixture prior to mixing is kept at a temperature of 0 to12 degrees Celsius as this influences the quality of the end product.

Preferably the temperature of the fat mixture prior to mixing is 1 to 12 degrees Celsius, more preferably 3 to 10 and even more preferably 5 to 8.

Prior to mixing the fat mixture is kept in motion by for example applying shear. Suitable methods include stirring the mixture with a stirring device as usually employed in factory settings in holding tanks. It is important that the fat mixture is kept in motion as otherwise the quality of the fat mixture may be affected in a negative way. Preferably the fat mixture is kept in motion in such a way that the resulting energy input in the fat mixture resulting from the motion is such that the increase in temperature of the fat mixture is 0 to 5 degrees Celsius, preferably 0 to 4 and more preferably 0.5 to 3. Said increase in temperature is measured for a fat mixture at a given temperature without external cooling or heating.

When applying the process for making a fat continuous food product the fat mixture is cooled, if necessary, to maintain the desired temperature in the holding tank and to compensate for the rise in temperature caused by for example the stirring device.

The process according to the invention can be stopped without producing excessive waste or the need of a rework facility. The final product is only formed in the mixing device that mixes the fat mixture and the aquous phase. In case production has to be stopped, for example because the packaging machine breaks down, the mixing operation can simply stop and only the volume that is present in the mixing device has to be discarded of. We have found that the fat mixture can be held in the holding tank for prolonged periods of time without affecting the quality of the end product when the process according to the present invention is applied.

The fat mixture may comprise other ingredients like emulsifiers or colorants in the amounts as usual in the production of fat continuous food products like for example spreads.

### Aqueous phase

The aqueous phase is prepared according to the standard way in accordance with the chosen ingredients. The aqueous phase may comprise, besides water, the usual components used for fat continuous food products like for example spreads; and include salt, acidifying agents, preservatives, proteins, thickener and gelling agents. The aqueous phase may also comprise oil, for example to aid the inclusion of hydrophobic ingredients in the aqueous phase.

The aqueous phase can be suitably held in a holding tank from which the aqueous phase is fed into a mixing device. To allow for a continuous process two holding tanks may be employed that are alternately used to feed into the mixing device thereby providing for an uninterrupted supply of aqueous phase and thus production of the fat continuous food product.

The temperature of the aqueous phase in the holding tank is not crucial. It may be preferred to keep the aqueous phase at elevated temperatures, for example to apply a pasteurizing step or to keep gelling and/or thickening agents from gelatinization. It may also be preferred to keep the aqueous phase at a lower temperature to minimize the energy used, subject to the composition of the aqueous phase. The aqueous phase can be held in the holding tank for a prolonged period of time without affecting the quality of the final fat continuous food product prepared with the aqueous phase.

The temperature of the aqueous phase at the time of mixing the aqueous phase and the fat mixture is such that the temperature of the mixture of the aqueous phase and the fat mixture is equal to or below 25 degrees Celsius. Thus depending on the temperature of the aqueous phase in the holding tank, the aqueous phase may have to be cooled down prior to mixing it with the fat mixture. Suitable devices include for example a tubular heat exchanger or the like.

The desired temperature of the aqueous phase prior to mixing thus depends on the temperature of the fat mixture. For example, a fat mixture temperature of about 5 degrees Celsius allows for an aqueous phase having a higher temperature taking into account the relative amounts of both phases.

Preferably the aqueous phase is cooled prior to mixing to a temperature of 1 to 25 degrees Celsius, more preferably 3 to 20 and even more preferably 5 to 15.

### Packaging

After the food product has been formed it is packed in the desired packaging format as preferred like for example tubs. The process of the present invention can be stopped if required, for example because the packaging machine breaks down, without resulting in excessive waste.

As there is no need for rework, the production line does not need the required equipment, allowing for a much simpler production design. It may therefore be preferred that the food product after production and up to the point of packing is not subjected to temperatures at which the fat continuous matrix of said food product deteriorates (i.e. remelting) as there is no need for rework.

More preferably the food product up to packing is not subjected to temperatures above 25 degrees Celsius, even more preferably 20 and most preferably 15 as rework is not required anymore in the process according to the invention.

### Food products

Food products that can suitably be made using the process of the present invention include fat continuous products like for example margarine, spreads and the like.

Preferably the food product comprises 5 to 45 wt% fat, preferably 10 to 35 and more preferably 15 to 30.

Preferably the food product is an edible fat continuous spread.

### Examples

Spreads with a composition according to Table 1 were made according to the method as described below.

**Table 1, Spreads composition (wt% on total spread composition)**

| AQUEOUS PHASE | Composition A | Composition B |
|---|---|---|
| Water | Balance to 100 wt% | Balance to 100 wt% |
| Merigel 341 | 4 | 4 |
| Gelatine | 1 | 1 |
| Dimodan HP | 0.3 | - |
| Sunflower oil | 4.7 | - |
| Salt | About 0.75 | About 0.75 |
| Preservatives | Minor amount | Minor amount |
| pH (acetic acid solution) | 4.8-5.5 | 4.8-5.5 |
| | | |

| FAT PHASE | | |
|---|---|---|
| Sunflower oil | 18.5 | 20.4 |
| Fat powder (inES48) | See Table 2 | - |
| Fat powder (inES48:Dimodan HP) | - | See Table 2 |

Merigel® 341: a highly crosslinked and stabilized pre-gelatinized waxy maize starch ex Tate & Lyle.
Dimodan® HP: molecularly distilled mono/diacylglyceride mixture derived from fully hardened palm oil (90% monoglyceride) ex Danisco.
Fat powder (inES48) is a fat powder of inES48 that was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51.
inES48: an interesterified mixture of 65% dry fractionated palm oil stearin with an Iodine Value of 14 and 35% palm kernel oil.
Fat powder (inES48:Dimodan HP): fat powder that was obtained using a supercritical melt micronisation process as above using a mixture of inES48 and Dimodan HP in a weight ratio of 85.71:14.29.

### Fat mixture

The fat mixture was made by dispersing the fat powder in the sunflower oil having a temperature of about 5 degrees Celsius, while degassing under vacuum. Sometimes lumps were formed. After pouring the fat mixture into a pre-cooled can of 5 degrees Celsius, it was made homogeneous and smooth by applying an Ultra-turrax for a few minutes at the lowest level of shear. The fat mixture was held at the temperature as in Table 2.

**Table 2, Fat mixture processing**

| Example | Wt% fat powder on total product | composition | Temperature of fat mixture (degrees C) |
|---|---|---|---|
| 1 | 4.5 | A | 6.5-7.5 |
| 2 | 4.5 | A | 77.8 |
| 3 | 4.5 | B | 7-7.5 |
| 4 | 4.8 | A | 6-7.6 |
| 5 | 5.0 | A | 6.5-7.8 |
| C-1 | 4.8 | A | 14-15.6 |
| C-2 | 5.0 | A | 14.5-15.2 |
| C-3 | 4.5 | B | 14.2-15.3 |

### Aqueous phase

The aqueous phase was made by:
Composition A:
   - Preparing a first mixture by mixing the gelling / thickening system and half of the amount of the water at low shear;
   - Preparing a second mixture by the remaining part of the water, the sunflower, Dimodan HP and the remaining ingredients at high shear;
   - Mixing the first and second mixture at low shear to obtain the aqueous phase. The pH was adjusted using an aqueous solution of acetic acid.
Composition B:
   - Preparing a first mixture by mixing the gelling / thickening system and half of the amount of the water at low shear;
   - Preparing a second mixture by the remaining part of the water and remaining ingredients at high shear;
   - Mixing the first and second mixture at low shear to obtain the aqueous phase. The pH was adjusted using an aqueous solution of acetic acid.

### Spreads production

The fat feed tank was thermo-stated at the temperature given in Table 2.
The aqueous feed tank was thermo-stated at 60 degrees Celsius. The fat feed tank and the aqueous feed tank feed via a junction point into a 50 ml double walled stainless steel pin stirrer, with two rows of 4 stator and rotor pins. During the spreads production the aqueous phase was pumped first through a tubular heat exchanger, cooled at 1.5 degrees Celsius per minute, to get a temperature drop from 60 to about 6-8 degrees Celsius, just before the junction point.

Initially the fat mixture phase was pumped into this system including the pin stirrer to fill it completely. Then both phases were pumped into the system at the required ratio using 2 gear pumps. After the junction point the mixture was pumped at about 12 kg/h, using a third gear pump, into the pin stirrer, which resulted in a residence time of 15 seconds in the stirrer. The pin stirrer was thermo-stated at 8°C and operated at 2000 rpm.
The final product was filled into 150 ml plastic tubs and stored at 5 degrees Celsius.

### Results

The spreads were assessed on the quality during production and their spreadability after storage of the spread for one week at 5 degrees Celsius, as well as after temperature cycling of the spread. Temperature cycling was done by storing the spread for one week at 5 degrees Celsius, followed by storing the spread for 16 hours at 20 degrees Celsius, followed by storing the spread at 5 degrees Celsius for one hour.

### Spreadibility

Spreadibility is determined according to the following protocol.
A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where 4 refers to a product still having some spreading properties, but an unacceptable level of defects.

The spreadability was not determined if no fat continuous spread could be made. If the spreadibility after one week storage was assessed to be 5, the spreadability after temperature cycling was not determined.

The results are given in the Table 3 below.

**Table 3, Spreadibility of spreads**

| Example | Holding time of the fat mixture (hrs) | Production quality | After 1 week storage | Temperature cycling |
|---|---|---|---|---|
| 1 | 72 | Smooth, good spread | 1-2 | 1-2 |
| 2 | 72 | Smooth, good spread | 2 | 2 |
| 3 | 36 | Smooth | 2 | 2 |
| 4 | 72 | Smooth, good spread | 1 | 1 |
| 5 | 48 | Good spread | 2 | 2 |
| C-1 | 24 | Loose moisture during production | 2-3 | 4 + free water |
| C-2 | 12 | No production possible | NM | NM |
| C-3 | 8 | No production possible | NM | NM |

| | | | | |
|---|---|---|---|---|
| NM - not measured | | | | |

## Claims

1. Process suitable for implementation at factory scale for manufacturing an edible fat continuous food product comprising the steps of
a. providing a fat mixture comprising fat powder and liquid oil;
b. providing an aqueous phase;
c. forming the edible fat continuous food product by mixing the aqueous phase and the fat mixture;
d. packing of the food product;
wherein
- the fat powder comprises structuring fat;
- the amount of fat powder in the fat mixture based on total amount of fat mixture is 8 to 25 wt%;
- the fat mixture prior to mixing is kept at a temperature of 0 to 12 degrees Celsius;
- the fat mixture is kept in motion prior to mixing; and
- the temperature of the aqueous phase at the time of mixing the aqueous phase and the fat mixture is such that the temperature of the mixture of the aqueous phase and the fat mixture is equal to or below 25 degrees Celsius.

2. Process according to claim 1 wherein the amount of fat powder in the fat mixture is 10 to 20% and more preferably 12 to 18%.

3. Process according to claim 1 or 2 wherein the temperature of the fat mixture is 1 to 12 degrees Celsius, preferably 3 to 10 and more preferably 5 to 8.

4. Process according to any one of claims 1 to 3 wherein the fat mixture is kept in motion and the resulting energy input in the fat mixture resulting from the motion is such that the increase in temperature of the fat mixture is 0 to 5 degrees Celsius preferably 0 to 4 and more preferably 0.5 to 3.

5. Process according to any one of claims 1 to 4 wherein the aqueous phase is cooled prior to mixing to a temperature of 1 to 25 degrees Celsius, preferably 3 to 20 and more preferably 5 to 15.

6. Process according to any one of claims 1 to 5 wherein the food product after production and up to the point of packing is not subjected to temperatures at which the fat continuous matrix of said food product deteriorates, preferably is not subjected to temperatures above 25 degrees Celsius, more preferably 20 and most preferably 15.

7. Process according to any one of claims 1 to 6 wherein the food product comprises 5 to 45 wt% fat, preferably 10 to 35 and more preferably 15 to 30.

8. Process according to any one of claims 1 to 7 wherein the food product is an edible fat continuous spread.

9. Process according to any one of claims 1 to 8 wherein the fat powder is a fat powder obtainable by supercritical melt micronisation.

## Patentansprüche

1. Verfahren, das zur Durchführung im Fabrikmaßstab geeignet ist, zur Herstellung eines essbaren Nahrungsmittelprodukts mit kontinuierlicher Fettphase, umfassend die Schritte:
a. Bereitstellen eines Fettgemisches, das Fettpulver und flüssiges Öl umfasst;
b. Bereitstellen einer wässrigen Phase;
c. Bilden des essbaren Nahrungsmittelprodukts mit kontinuierlicher Fettphase durch Mischen der wässrigen Phase und des Fettgemisches;
d. Verpacken des Nahrungsmittelprodukts,
wobei
- das Fettpulver strukturierendes Fett umfasst;
- die Menge an Fettpulver in dem Fettgemisch, bezogen auf die Gesamtmenge des Fettgemisches, 8 bis 25 Gew.-% beträgt;
- das Fettgemisch vor Mischen bei einer Temperatur von 0 bis 12 °C gehalten wird;
- das Fettgemisch vor Mischen in Bewegung gehalten wird und
- die Temperatur der wässrigen Phase zur Zeit des Mischens der wässrigen Phase und des Fettgemisches so ist, dass die Temperatur des Gemisches aus der wässrigen Phase und dem Fettgemisch gleich oder unter 25 °C ist.

2. Verfahren gemäß Anspruch 1, wobei die Menge an Fettpulver in dem Fettgemisch 10 bis 20 % und bevorzugter 12 bis 18 % ist.

3. Verfahren gemäß Anspruch 1 oder 2, wobei die Temperatur des Fettgemisches 1 bis 12 °C, vorzugsweise 3 bis 10 und bevorzugter 5 bis 8, ist.

4. Verfahren gemäß einem der Ansprüche 1 bis 3, wobei das Fettgemisch in Bewegung gehalten wird und die resultierende Energiezufuhr in das Fettgemisch, die aus der Bewegung resultiert, so ist, dass die Temperaturerhöhung des Fettgemisches 0 bis 5 °C, vorzugsweise 0 bis 4 und bevorzugter 0,5 bis 3, ist.

5. Verfahren gemäß einem der Ansprüche 1 bis 4, wobei die wässrige Phase vor einem Mischen auf eine Temperatur von 1 bis 25 °C, vorzugsweise 3 bis 20 und bevorzugter 5 bis 15, gekühlt wird.

6. Verfahren gemäß einem der Ansprüche 1 bis 5, wobei das Nahrungsmittelprodukt nach Herstellung und bis zum Verpackungspunkt keinen Temperaturen unterworfen wird, bei welchen sich die kontinuierliche Fettmatrix des Nahrungsmittelprodukts verschlechtert, vorzugsweise keinen Temperaturen über 25 °C, bevorzugter 20 und äußerst vorteilhaft 15, unterworfen wird.

7. Verfahren gemäß einem der Ansprüche 1 bis 6, wobei das Nahrungsmittelprodukt 5 bis 45 Gew.-% Fett, vorzugsweise 10 bis 35 und bevorzugter 15 bis 30, umfasst.

8. Verfahren gemäß einem der Ansprüche 1 bis 7, wobei das Nahrungsmittelprodukt ein essbarer Aufstrich mit kontinuierlicher Fettphase ist.

9. Verfahren gemäß einem der Ansprüche 1 bis 8, wobei das Fettpulver ein Fettpulver ist, das durch superkritische Schmelzmikronisierung erhältlich ist.

## Revendications

1. Procédé approprié pour la mise en oeuvre à l'échelle d'une usine pour la fabrication d'un produit alimentaire continu gras comestible comprenant les étapes consistant à :
a. fournir un mélange gras comprenant une poudre grasse et une huile liquide ;
b. fournir une phase aqueuse ;
c. former le produit alimentaire continu gras comestible en mélangeant la phase aqueuse et le mélange gras ;
d. emballer le produit alimentaire ;
dans lequel
- la poudre grasse comprend une graisse structurante ;
- la quantité de poudre grasse dans le mélange gras sur la base de la quantité totale du mélange gras est de 8 à 25 % en poids ;
- le mélange gras avant le mélange est maintenu à une température de 0 à 12 degrés Celsius ;
- le mélange gras est maintenu en mouvement avant le mélange ; et
- la température de la phase aqueuse au moment du mélange de la phase aqueuse et du mélange gras est telle que la température du mélange de la phase aqueuse et du mélange gras est inférieure ou égale à 25 degrés Celsius.

2. Procédé selon la revendication 1, dans lequel la quantité de poudre grasse dans le mélange gras est de 10 à 20 % et de préférence de 12 à 18 %.

3. Procédé selon la revendication 1 ou 2, dans lequel la température du mélange gras est de 1 à 12 degrés Celsius, de préférence de 3 à 10 et de manière davantage préférée de 5 à 8.

4. Procédé selon l'une quelconque des revendications 1 à 3, dans lequel le mélange gras est maintenu en mouvement et l'apport énergétique résultant dans le mélange gras résultant du mouvement est tel que l'augmentation de température du mélange gras est de 0 à 5 degrés Celsius, de préférence de 0 à 4 et de manière davantage préférée de 0,5 à 3.

5. Procédé selon l'une quelconque des revendications 1 à 4, dans lequel la phase aqueuse est refroidie avant le mélange à une température de 1 à 25 degrés Celsius, de préférence de 3 à 20 et de manière davantage préférée de 5 à 15.

6. Procédé selon l'une quelconque des revendications 1 à 5, dans lequel le produit alimentaire après la production et jusqu'au moment de l'emballage n'est pas soumis à des températures auxquelles la matrice continue grasse dudit produit alimentaire se détériore, de préférence n'est pas soumis à des températures au-delà de 25 degrés Celsius, de manière davantage préférée au-delà de 20 et de manière préférée entre toutes au-delà de 15.

7. Procédé selon l'une quelconque des revendications 1 à 6, dans lequel le produit alimentaire comprend de 5 à 45 % en poids de graisse, de préférence de 10 à 35 et de manière davantage préférée de 15 à 30.

8. Procédé selon l'une quelconque des revendications 1 à 7, dans lequel le produit alimentaire est un produit à tartiner continu gras comestible.

9. Procédé selon l'une quelconque des revendications 1 à 8, dans lequel la poudre grasse est une poudre grasse réalisable par micronisation à l'état fondu supercritique.
